Europäisches Patentamt

European Patent Office

Office européen des brevets

(19)

(11)  EP 0 702 225 A2

(12)  **EUROPÄISCHE PATENTANMELDUNG**

(43) Veröffentlichungstag:
20.03.1996  Patentblatt 1996/12

(51) Int. Cl.$^6$: **G01M 17/04**,  B60C 23/06

(21) Anmeldenummer: 95111461.0

(22) Anmeldetag: 20.07.1995

(84) Benannte Vertragsstaaten:
**DE ES FR GB IT**

(30) Priorität: **15.09.1994 DE 4432892**

(71) Anmelder: **Bayerische Motoren Werke
Aktiengesellschaft
D-80788 München (DE)**

(72) Erfinder:
• **Konik, Dieter, Dr.
D-82211 Herrsching (DE)**
• **Wimmer, Markus
D-81475 München (DE)**

(54)    **Verfahren zum Ermitteln des Zustands einer Radaufhängungskomponente**

(57)    Bei einem Verfahren zum Ermitteln des Zustands einer Radaufhängungskomponente mittels Messung aller Radgeschwindigkeiten und mittels Extraktion eines spektralen Kennwertes aus jeder Radgeschwindigkeit ist der spektrale Kennwert eine für die Radaufhängungskomponente charakteristische Frequenz. Der Zustand der Radaufhängungskomponente wird aus der Intensität des die Frequenz enthaltenden Signals ermittelt.

Fig. 1

**Beschreibung**

Die Erfindung bezieht sich auf ein Verfahren zum Ermitteln des Zustands einer Radaufhängungskomponente nach dem Oberbegriff des Patentanspruchs 1.

Ein derartiges Verfahren ist beispielsweise aus der EP 0 578 826 A bekannt. Bei diesem bekannten Verfahren werden die Raddrehzahlen bzw. die Radgeschwindigkeiten jedes Rades eines Kraftfahrzeuges ermittelt. Mittels Fourier-Transformation wird jeweils die momentane Resonanzfrequenz der Radgeschwindigkeitsänderungen erfaßt. Der EP 0 578 826 A liegt der Gedanke zugrunde, daß sich die Resonanzfrequenzen bezogen auf die Radgeschwindigkeiten in Abhängigkeit vom Luftdruck im Reifen ändern. Die jeweils ermittelte momentane Resonanzfrequenz wird somit als Maß für den momentanen Luftdruck im Reifen verwendet.

Zum einen ist fraglich, ob tatsächlich eine Änderung der Resonanzfrequenz in Abhängigkeit des Luftdrucks des Reifens vorliegt und zum anderen ist für die Bestimmung einer sich ändernden Resonanzfrequenz eine aufwendige Frequenzanalyse notwendig.

Weiterhin ist aus der EP 291 217 B1 ebenfalls ein Verfahren zum Ermitteln des Zustands einer Radaufhängungskomponente mittels Messung aller Radgeschwindigkeiten bekannt, bei dem der Reifenluftdruck ermittelt wird. Bei diesem bekannten Verfahren werden, im Unterschied zur Extraktion eines spektralen Kennwertes aus den Radgeschwindigkeiten, Mittelwerte der Radgeschwindigkeiten gebildet und die Mittelwerte der jeweils in der Diagonale liegenden Räder miteinander verglichen. Bei einer Differenz dieser Mittelwerte wird auf eine Luftdruckänderung in einem Reifen geschlossen. Dieses bekannte Verfahren ist jedoch für die Ermittlung des Luftdrucks im Reifen zu ungenau, da auch andere Ursachen zu niederfrequenten Radgeschwindigkeitsänderungen führen können.

Ein sehr viel genaueres Verfahren zur Ermittlung des Zustands von Radaufhängungskomponenten, z. B. des Reifenluftdrucks und/oder des Dämpferverhaltens, ist beispielsweise aus der EP 455 993 A2 bekannt. Bei diesem bekannten Verfahren werden mittels spezieller Sensoren an den Radachsen der vier Räder eines Kraftfahrzeuges die Vertikalbeschleunigungen jedes Rades gemessen. Darüber hinaus wird anhand einer Quotientenbildung der Leistungsspektren, insbesondere zwischen den Vertikalbeschleunigungssignalen der Vorder- und Hinterachse einer Fahrzeugseite, in charakteristischen Frequenzbereichen der Zustand einer Radaufhängungskomponente, wie z. B. des Reifens oder des Dämpfers, ermittelt. Dieses bekannte Verfahren erfordert einen hohen Aufwand, da eigens dafür vorgesehene Sensoren und Mittel zur Zeit-Frequenz-Transformation vorgesehen sein müssen.

Es ist Aufgabe der Erfindung, ein Verfahren eingangs genannter Art derart zu verbessern, daß die Ermittlung des Zustands einer Radaufhängungskomponente durch Einsatz ohnehin vorhandener Sensoren kostengünstig und trotz einfacher Auswertemittel ausreichend genau ist.

Diese Aufgabe wird durch die kennzeichnenden Merkmale des Patentanspruchs 1 gelöst.

Danach ist der spektrale Kennwert eine für die Radaufhängungskomponente charakteristische Frequenz. Der Zustand der Radaufhängungskomponente wird aus der Intensität des diese Frequenz enthaltenden Signals ermittelt.

Hierzu wird vorzugsweise das die Radgeschwindigkeit enthaltende Signal jedes Rades an ein Filter weitergegeben, das im wesentlichen die Signalanteile mit der für die jeweils zu untersuchende Radaufhängungskomponente charakteristischen Frequenz ausgibt. Soll beispielsweise der Reifenluftdruck ermittelt werden, wird hierfür der Signalanteil mit der charakteristischen Frequenz von ca. 38 Hz oder soll beispielsweise der Dämpferzustand ermittelt werden, wird der Signalanteil mit der charakteristischen Frequenz von ca. 10 Hz aus den Radgeschwindigkeitssignalen extrahiert. Anschließend wird die Intensität dieses gefilterten Signals ermittelt, die ein Maß für den Zustand der jeweiligen Radaufhängungskomponente darstellt. Für dieses Verfahren zum Ermitteln des Zustands einer Radaufhängungskomponente müssen die zu analysierenden Signale nicht frequenztransformiert werden. Somit ist lediglich eine einfache Auswertevorrichtung nötig, die jedoch den Zustand einer Radaufhängungskomponente mit einer höheren Genauigkeit als bei bekannten einfachen Systemen ermittelt.

Eine vorteilhafte Weiterbildung der Erfindung ist der Gegenstand des Patentanspruchs 2.
Erfindungsgemäß ist das die charakteristische Frequenz enthaltende Signal sinusförmig und wird die Intensität dieses Signals durch Auswertung seiner Amplitude bestimmt.

Die Auswertung der Amplitude eines sinusförmigen Signals im Zeitbereich ist gegenüber anderen Signalen besonders einfach. Vorzugsweise wird die Amplitude des sinusförmigen Signals mittels Verwendung der Kreisgleichung gebildet.

Eine weitere vorteilhafte Ausgestaltung der Erfindung ist der Gegenstand des Patentanspruchs 3.
Der Zustand der Radaufhängungskomponente wird durch Bildung des Quotienten der Intensitäten der aus den Radgeschwindigkeiten des vorderen und des hinteren Rades einer Fahrzeugseite gewonnenen Signale ermittelt.
Dies ist ein besonders einfaches Verfahren, um ein Signal oder einen Wert für den Zustand der Radaufhängungskomponente zu erhalten, der zumindest nahezu unabhängig von der Fahrbahnoberfläche ist.

Eine weitere vorteilhafte Ausgestaltung der Erfindung ist der Gegenstand des Patentanspruchs 4.
Der Zustand der Radaufhängungskomponente wird sowohl aus dem Quotienten der Intensitäten als auch durch einen Korrekturvert derart ermittelt, daß die Ermittlung des Zustandes unabhängig von der Fahrbahnoberfläche ist.
Hierfür wird vorzugsweise zu dem Quotienten der beiden genannten Intensitäten die Summe der beiden Intensitäten, multipliziert mit dem Korrekturwert, hinzuaddiert. Hierdurch kann die Genauigkeit der Ermittlung des Zustandes der Radaufhängungskomponente weiter erhöht werden.

In der Zeichnung ist ein Ausführungsbeispiel der Erfindung dargestellt. Es zeigt

Fig. 1    ein Blockschaltbild zur Durchführung des erfindungsgemäßen Verfahrens und

Fig. 2    ein Beispiel zur Ermittlung der Intensität des die charakteristische Frequenz enthaltenden Signals mittels Anwendung der Kreisgleichung.

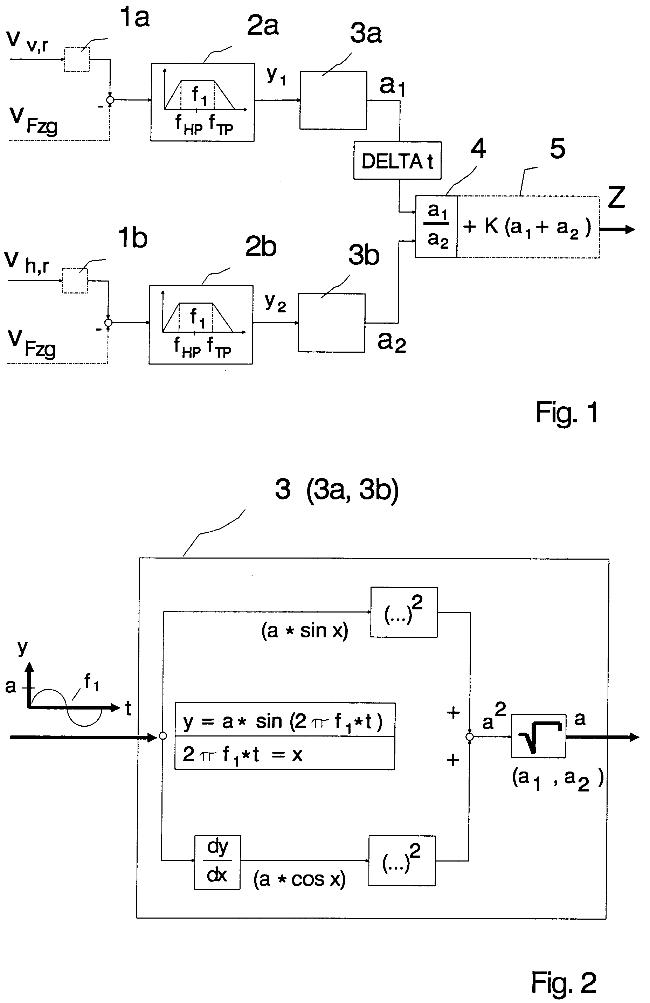

Am Beispiel einer rechten Fahrzeugseite werden in Fig. 1 das Radgeschwindigkeitssignal $v_{v,r}$ des vorderen Rades und das Radgeschwindigkeitssignal $v_{h,r}$ des hinteren Rades jeweils an ein Bandpaßfilter 2a bzw. 2b als Eingangssignale herangeführt. Um gegebenenfalls bestimmte Unterschiede der Radaufhängungskomponenten zu kompensieren, können die Radgeschwindigkeitssignale $v_{v,r}$ und $v_{h,r}$ mit Korrekturfaktoren 1a bzw. 1b multipliziert werden. Weiterhin ist es möglich, anstelle der Radgeschwindigkeiten $v_{v,r}$ und $v_{h,r}$ die Differenz zwischen diesen Radgeschwindigkeiten und einer sich gegenüber den Radgeschwindigkeiten nur sehr langsam ändernden Referenzgeschwindigkeit, wie z. B. der Fahrzeuggeschwindigkeit $v_{Fzg}$, als Eingangssignale für die Bandpaßfilter 2a bzw. 2b zu verwenden. Dadurch würden geringere Anforderungen an den Hochpaßanteil des Bandpasses gestellt werden, da lediglich die hochfrequenten Anteile der Radgeschwindigkeitssignale interessieren.

Die Bandpaßfilter 2a bzw. 2b weisen eine untere Grenzfrequenz $f_{HP}$ entsprechend der Grenzfrequenz des Hochpaßanteils und eine obere Grenzfrequenz $f_{TP}$ entsprechend des Tiefpaßanteils auf. Die Bandpaßfilter 2a bzw. 2b sind derart ausgestaltet, daß als Ausgangssignal ein sinusförmiges Signal y ($y_1$ bzw. $y_2$) ausgegeben wird, das näherungsweise eine einzige Frequenz, nämlich die charakteristische Frequenz $f_1$, aufweist. Die maximale Amplitude a dieses sinusförmigen Signals y entspricht der zu ermittelnden Intensität, die bereits selbst ein Maß für den Zustand der entsprechenden Radaufhängungskomponente sein kann, jedoch noch von der Fahrbahnoberfläche abhängt. In dem Ausführungsbeispiel nach Fig. 1 ist jedoch der Zustand Z einer Radaufhängungskomponente durch die Unterschiede der Radaufhängungskomponenten einer Fahrzeugseite definiert.

In Fig. 1 wird zunächst aus dem sinusförmigen Signal y mittels eines Intensitätsermittlungsblocks 3a bzw. 3b für das vordere rechte Rad die Amplitude bzw. Intensität $a_1$ und für das hintere rechte Rad die Intensität $a_2$ berechnet. Die Intensitäten $a_1$ und $a_2$ werden daraufhin einem Block 4 zugeführt, der den Quotienten $a_1/a_2$ bildet. Zuvor wird die Intensität $a_1$ mittels eines Zeitgliedes um die Zeitdauer DELTA t in Abhängigkeit von der Fahrzeuggeschwindigkeit und dem Radstand verzögert, so daß im Block 4 zur Quotientenbildung die Intensitäten a1 und a2 des vorderen und hinteren Rades bezogen auf die gleiche Stelle der Fahrbahnoberfläche gleichzeitig vorliegen. Alternativ zu dem verzögernden Zeitglied kann für beide Intensitäten $a_1$ und $a_2$ auch ein Tiefpaß verwendet werden, dessen Zeitkonstante um ein Vielfaches größer als die Verzögerungs-Zeitdauer DELTA t ist. Der Quotient $a_1/a_2$ ist ein Maß für den Zustand der Radaufhängungskomponenten für das vordere und hintere rechte Rad dahingehend, daß deren Unterschied durch den Wert dieses Quotienten ermittelt wird. Für eine bessere Genauigkeit dieses Unterschiedes kann in Block 5 zu dem Quotienten $a_1/a_2$ der Intensitäten die mit dem Korrekturwert K multiplizierte Summe der Intensitäten $a_1$ und $a_2$ hinzuaddiert werden. Hierdurch wird das Ausgangssignal Z empfindlicher und kann zur Ermittlung der Unterschiede und damit des Zustands der Radaufhängungskomponenten besser ausgewertet und weiterverarbeitet werden.

In Fig. 2 ist ein Beispiel für die Ausgestaltung der Intensitätsermittlungsblöcke 3a bzw. 3b (bzw. 3) dargestellt. Für jede Radaufhängungskomponente wird jeweils das sinusförmige Signal y, das die charakteristische Frequenz $f_1$ enthält, als Eingangssignal dem Intensitätsermittlungsblock 3 zugeführt. Das Ausgangssignal des Intensitätsermittlungsblocks ist die Amplitude a ($a_1$ bzw. $a_2$), die durch den Intensitätsermittlungsblock 3 aus dem Signal y berechnet wird.

Das Signal y kann mit seiner Amplitude bzw. Intensität a durch folgende Gleichung beschrieben werden:

$$y = a * \sin (2 \pi f_1 * t)$$

Der Term ($2 \pi f_1 * t$) wird zur Vereinfachung durch den Buchstaben x substituiert. Somit kann das Signal y auch durch folgende Gleichung dargestellt werden:

$$y = a * \sin x.$$

Der Intensitätsermittlungsblock 3 verwendet zur Bildung der Amplitude bzw. Intensität a die Kreisgleichung:

$$(\sin x)^2 + (\cos x)^2 = 1$$

Diese Kreisgleichung wird mit $a^2$ erweitert. Hieraus ergibt sich:

$$a^2 = (a * \sin x)^2 + (a * \cos x)^2$$

Zur Gewinnung der Intensität a muß aus dem Term für $a^2$ die Wurzel berechnet werden.

Um die Kreisgleichung verwenden zu können, muß $(\cos x)^2$ gebildet werden. Wird das Eingangssignal $y = a * \sin x$ z.B. differenziert, d. h. $dy/dx$ gebildet, erhält man den Ausdruck ($a * \cos x$). Wird das Eingangssignal $y = a * \sin x$ alternativ (hier nicht dargestellt) integriert, erhält man den Ausdruck ($-a * \cos x$). Daraufhin wird in dem Intensitätsermittlungsblock 3 sowohl ($a * \sin x$) als auch (a * cos x) bzw. (- a * cos x) potenziert, anschließend addiert und daraufhin an einen Block weitergeführt, der zur Gewinnung der Intensität bzw. Amplitude a aus dieser Summe die Wurzel zieht.

Zwar könnte im Intensitätsermittlungsblock 3 alternativ auch der Betrag des Signals y gebildet und anschließend eine Tiefpaßfilterung durchgeführt werden, jedoch hat der Intensitätsblock 3 nach Fig. 2 unter Verwendung der Kreisgleichung den Vorteil, daß die Berechnung der Intensität a genauer, kontinuierlich und ohne Zeitverzögerung, die z. B. durch den Phasenverzug eines Tiefpaßfilters entstehen würde, durchgeführt wird.

Mittels dieses erfindungsgemäßen Ausführungsbeispiels ist eine einfache und sehr genaue Ermittlung eines Zustands einer Radaufhängungskomponente, z. B. eines Reifens oder eines Dämpfers, z. B. auch in Form eines Unterschieds von Radaufhängungskomponenten, möglich. Das erfindungsgemäß ermittelte Ausgangssignal Z kann beliebig weiterverarbeitet werden, um z.B. einen Komponentendefekt anzuzeigen oder eine Regelung in einem Radaufhängungsregelsystem oder in einem Luftdruckkontrollsystem durchzuführen.

## Patentansprüche

1. Verfahren zum Ermitteln des Zustands einer Radaufhängungskomponente mittels Messung aller Radgeschwindigkeiten und mittels Extraktion eines spektralen Kennwertes aus jeder Radgeschwindigkeit, dadurch gekennzeichnet, daß der spektrale Kennwert eine für die Radaufhängungskomponente charakteristische Frequenz ($f_1$) ist und der Zustand (Z) der Radaufhängungskomponente aus der Intensität (a) des die Frequenz ($f_1$) enthaltenden Signals ( a * sin ($2\pi f_1$*t) ) ermittelt wird.

2. Verfahren nach Patentanspruch 1, dadurch gekennzeichnet, daß das die Frequenz ($f_1$) enthaltende Signal ( a * sin ($2\pi f_1$*t) ) sinusförmig ist und die Intensität (a) dieses Signals ( a * sin ($2\pi f_1$*t) ) durch Auswertung seiner Amplitude bestimmt wird.

3. Verfahren nach Patentanspruch 1 oder 2, dadurch gekennzeichnet, daß der Zustand (Z) der Radaufhängungskomponente durch Bildung des Quotienten ($a_1/a_2$) der Intensitäten (a bzw. $a_1$, $a_2$) der aus den Radgeschwindigkeiten des vorderen ($v_{v,r}$) und des hinteren Rades ($v_{h,r}$) einer Fahrzeugseite gewonnenen Signale ( a * sin ($2\pi f_1$*t) ) ermittelt wird.

4. Verfahren nach Patentanspruch 3, dadurch gekennzeichnet, daß der Zustand (Z) der Radaufhängungskomponente aus dem Quotienten ($a_1/a_2$) und einem Korrekturwert (K) derart ermittelt wird, daß die Ermittlung des Zustandes (Z) unabhängig von der Fahrbahnoberfläche ist.

Fig. 1

Fig. 2